# EUROPÄISCHE PATENTANMELDUNG

(11) **EP 4 287 050 A1**
(43) Veröffentlichungstag der Anmeldung: **06.12.2023**
(21) Anmeldenummer: 22176091.1
(22) Anmeldetag: 30.05.2022
(51) Int. Cl.: G06F 21/52

(54) **ÜBERWACHUNG EINES ANWENDUNGSPROGRAMMS IN ABHÄNGIGKEIT DESSEN PRIVILEGS**

(71) Anmelder: Siemens Aktiengesellschaft, 80333 München (DE)
(72) Erfinder: Falk, Rainer, 85586 Poing (DE); Feist, Christian Peter, 80689 München (DE); Pfau, Axel, 79117 Freiburg (DE); Pyka, Stefan, 85570 Markt Schwaben (DE); Schneider, Daniel, 80796 München (DE); Sperl, Franz, 92526 Oberviechtach (DE)
(74) Vertreter: Siemens Patent Attorneys

(57) **Zusammenfassung**

Die Erfindung betrifft ein System (1), aufweisend:
- eine Laufzeitumgebung (4), ausgebildet mindestens ein Anwendungsprogramm (3, 8) auszuführen, wobei dem mindestens einem Anwendungsprogramm (3, 8) ein Privileg (7) zugeordnet ist, wobei ein Durchführen einer Aktion durch das Anwendungsprogramm (3, 8) das Privileg (7) voraussetzt,
- eine Überwachungseinheit (6), wobei die Überwachungseinheit (6) ausgebildet ist, einen Umfang einer Überwachung des mindestens einen Anwendungsprogramms (3, 8) in Abhängigkeit des Privilegs (7) und dem Durchführen der Aktion durchzuführen. Außerdem betrifft die Erfindung ein zugehöriges Verfahren.

## Beschreibung

### HINTERGRUND DER ERFINDUNG

### Gebiet der Erfindung

Die vorliegende Erfindung betrifft ein System zur Überwachung eines Anwendungsprogramms in Abhängigkeit dessen Privilegs. Außerdem betrifft die Erfindung ein zugehöriges Verfahren.

### Beschreibung des Stands der Technik

Durch eine zunehmende Vernetzung in verschiedenen Anwendungen, insbesondere industriellen Anwendungen, sowie durch den Bedarf, größere Datenmengen für die Optimierung von Herstellungsprozessen lokal zu verarbeiten, werden industrielle Systeme vermehrt flexibel hinsichtlich ihrer Funktionalität gestaltet. Dies wird insbesondere durch das Verwenden von nachladbaren Applikationen, auch als Anwendungen oder Apps bezeichenbar, ermöglicht, mit denen die Gerätefunktionalität auch im Feld, d.h. im Einsatz, einfach und schnell angepasst werden kann.

Dabei soll dem Anwender ein möglichst breites Spektrum an nachladbaren Applikationen angeboten werden. Hierdurch werden spezielle Anforderungen an die Sicherheitsmechanismen eines Systems, insbesondere eines Geräts, insbesondere eines industriellen Gerätes, gestellt, insbesondere da Apps unterschiedlich ausgeprägte Privilegien auf dem System benötigen, darunter insbesondere ein Zugriff auf bestimmte Dateien oder Schnittstellen und außerdem insbesondere von unterschiedlichen Herstellern oder Drittanbietern bereitgestellt werden.

In einem industriellen Umfeld finden sich häufig Apps mit invasiven Fähigkeiten wieder, wie insbesondere Diagnose-Apps zur Analyse des Netzwerkverkehrs oder der auf dem Gerät ausgeführten Prozesse, oder Apps mit einer tieferen Integration, wie Layer 2 Netzwerkzugriff oder Zugriff auf einen hardware-basierten Schlüsselspeicher, insbesondere Trusted Platform Module (TPM).

Apps von Drittanbietern, die möglicherweise als weniger vertrauenswürdig eingestuft werden, können außerdem solche Privilegien zugeordnet werden, um Aktionen, die zur Ausführung durch die App vorgesehen sind, ordnungsgemäß ausführen zu können. Eine Kompromittierung einer App mit erhöhten Privilegien, insbesondere durch das Ausnutzen einer Schwachstelle, kann daher ohne zusätzliche Schutzmaßnahmen eine umfangreiche Kompromittierung des Gerätes oder anderer Apps zur Folge haben, da die zugeordneten Privilegien dann für andere Aktionen ausgenutzt werden können.

Ein grundsätzliches Abschalten oder Verbieten von privilegierten Schnittstellen oder Ressourcen ist in vielen Fälle nicht möglich. Andererseits können privilegierte Schnittstellen oder Ressourcen für nicht vorgesehene Zwecke durch eine App missbraucht werden.

Die Aufgabe der Erfindung besteht darin, eine verbesserte Lösung für Anwendungsprogramme und deren Kontrolle bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein System, aufweisend:
- eine Laufzeitumgebung, ausgebildet mindestens ein Anwendungsprogramm auszuführen, wobei dem mindestens einem Anwendungsprogramm ein Privileg zugeordnet ist, wobei ein Durchführen einer Aktion durch das Anwendungsprogramm das Privileg voraussetzt,
- eine Überwachungseinheit, wobei die Überwachungseinheit ausgebildet ist, einen Umfang einer Überwachung des mindestens einen Anwendungsprogramms in Abhängigkeit des Privilegs und dem Durchführen der Aktion durchzuführen.

Das Privileg kann auch als eine Erlaubnis etwas zu tun, ein Zugriffsrecht oder ein Zugangsrecht bezeichnet werden.

Das Privileg kann insbesondere als mindestens ein Privileg ausgebildet sein und/oder mehrere Privilegien umfassen.

Bei dem Durchführen der Aktion wird das Privileg insbesondere eingesetzt, da das Durchführen der Aktion durch das Anwendungsprogramm, auch als App bezeichenbar, das Privileg voraussetzt, somit wird überwacht, wie das Durchführen der Aktion geschieht und für welche Aktionen das Anwendungsprogramm das Privileg nutzt.

Ein Aspekt der Erfindung besteht darin, die von Apps während ihrer Ausführungen durchgeführten Aktionen in Abhängigkeit ihrer Privilegien und weiterer Eigenschaften zu überwachen. So kann durch das Überwachen festgestellt werden, ob die App ihr Privileg oder ihre Privilegien für die vorgesehenen Aktionen verwendet oder, ob sie eine nichterlaubte Aktion durchführt und ihre Privilegien somit missbraucht.

Die Erfindung bietet eine Lösung, die es ermöglicht, Apps auf Basis der ihnen zur Verfügung gestellten Privilegien, insbesondere Schnittstellen oder Ressourcen, und auf die Verwendung dieser zu überwachen.

In einer Weiterbildung der Erfindung ist das System ausgebildet als:
- ein Edge-Gerät und/oder
- ein IoT-Gateway und/oder
- ein industrielles Gerät und/oder
- ein Industrie-PC und/oder
- ein Linux-basiertes System und/oder
- ein on-premise Server-System und/oder
- ein Server-System in einer Cloud-Umgebung.

In Linux-basierten System kann es sich bei erhöhten Privilegien insbesondere um spezielle Linux Capabilities wie CAP_NET_ADMIN, die das Administrieren von Netzwerkressourcen wie Routing-Tabellen oder Netzwerkinterfaces erlauben, den Zugriff auf Teile des Host-Dateisystems, den Zugriff auf den Docker-Socket oder dem Verwenden bestimmter Systemaufrufe (syscalls) handeln.

In einer weiteren Weiterbildung der Erfindung ist die Überwachungseinheit ausgebildet, die Aktion zu prüfen. So kann festgestellt werden, ob die Aktion eine erlaubte und/oder eine für das Anwendungsprogramm vorgesehene Aktion ist, oder ob das Anwendungsprogramm eine nicht erlaubte Aktion durchführt und ihr Privileg missbraucht.

Es können Monitoring-Mechanismen zum Überwachen bzw. Überprüfen, insbesondere in Abhängigkeit eines ermittelten Überwachungsprofils, der ausgeführten Aktionen, sowie ggf. eine nachgeschaltete Auswertung der Aktionen, auf dem Gerät konfiguriert werden. Insbesondere sind folgende Ausführungsformen denkbar:
- Die Nutzung von privilegierten Capabilities / Syscalls, beispielsweise CAP_SYS_PTRACE / ptrace(), kann dahingehend überwacht werden, dass diese nur zu bestimmten, nicht invasiven Aktionen verwendet werden (z.B. Überwachen bestimmter Prozesse von Apps des gleichen Herstellers). Die Überwachung des Anwendungsprogramms kann insbesondere durch die Verwendung dedizierter eBPF-Programme, einem Kernel-Modul, oder insbesondere auditd Regeln realisiert werden. Denkbar ist auch die Verwendung eines MAC-Systems (insbesondere SELinux / AppArmor), wobei die Prozesse der App in einer passiven SELinux-Domäne / unter einem passiven AppArmor-Profil ausgeführt werden, wodurch nicht erlaubte Aktionen zwar zugelassen, aber durch den MAC-Mechanismus protokolliert werden.
- Überwachen der mittels eines Sockets durchgeführten API-Aufrufe, dass Ressourcen insbesondere nur gelesen (GET-Aufrufe) aber nicht modifiziert (insbesondere PUT- oder POST-Aufrufe) werden. Dies kann insbesondere durch das Erzeugen eines App-spezifischen Proxy-Sockets und eines Gateway-Prozesses erreicht werden. Die App verwendet statt dem eigentlichen Ziel-Socket einen Proxy-Socket, dessen Aufrufe durch einen Gateway-Prozess überwacht und an das Ziel-Socket weitergeleitet werden.
- Für den Zugriff auf bestimmte Teile des Host-Dateisystems kann der App ein temporäres Proxy-Dateisystem bereitgestellt werden. Mit diesem kann das Host-Dateisystem, bzw. ein Teil davon, zunächst nur lesend zur Verfügung gestellt werden. Von der App durchgeführte Dateiänderungen werden dabei nicht direkt auf den Originaldateien durchgeführt, sondern auf Kopien der betroffenen Dateien, welche die Originaldateien anschließend aus Sicht der App maskieren. Dies kann insbesondere mittels eines Overlay-Dateisystems realisiert werden. Vor dem Kopieren der Änderungen in die Originaldatei können die Änderungen nun überprüft werden. So kann insbesondere sichergestellt werden, dass eine App Daten zu einer Hostdatei hinzufügen, aber nicht löschen kann.

In einer weiteren Weiterbildung der Erfindung ist die Überwachungseinheit ausgebildet, den Umfang der Überwachung in Abhängigkeit eines Einsatzes des Privilegs durchzuführen. So kann festgestellt werden, ob das Privileg eingesetzt wird und/oder für was das Privileg eingesetzt wird und/oder ob darunter eine unerlaubte Aktion ist.

In einer weiteren Weiterbildung der Erfindung ist die Überwachungseinheit ausgebildet, den Umfang der Überwachung in Abhängigkeit eines Umfangs des Privilegs durchzuführen. Der Umfang der Überwachung wird somit abhängig von den Berechtigungen, die der App gewährt werden, bestimmt. Ein höherer Umfang des Privilegs bedeutet, dass einer App mehr Rechte zustehen als eine App mit einem Privileg niedrigeren Umfangs.

In einer weiteren Weiterbildung der Erfindung ist die Überwachungseinheit ausgebildet, den Umfang der Überwachung in Abhängigkeit von:
- einem Anbieter des Anwendungsprogramms, insbesondere durch eine Herstellerinformation, und/oder
- Metadaten des Anwendungsprogramms und/oder
- einer Konfiguration des Anwendungsprogramms und/oder
- einer Plattform, von der das Anwendungsprogramm geladen wurde, insbesondere ein App-Store, und/oder
- einem Nutzer, der das Anwendungsprogramm installiert hat, und/oder
- einem Nutzer, der das Anwendungsprogramm verwendet, und/oder
- einem aktuellen Betriebsmodus des Systems und/oder
- einem Zustand oder Betriebsmodus eines durch das System gesteuerten technischen Prozess, wobei der Zustand oder der Betriebsmodus insbesondere von einem Produktionsplanungssystem abfragbar sind,
durchzuführen.

In einer weiteren Weiterbildung der Erfindung ist die Überwachungseinheit ausgebildet, dem mindestens einem Anwendungsprogramm ein Überwachungsprofil zuzuweisen. Durch das Überwachungsprofil können Voreinstellungen zu dem Umfang der Überwachung und insbesondere die zu überprüfenden Aktionen zugewiesen werden.

In einer weiteren Weiterbildung der Erfindung ist die Überwachungseinheit ausgebildet, den Umfang der Überwachung in Abhängigkeit des Überwachungsprofils durchzuführen.

In einer weiteren Weiterbildung der Erfindung ist das erfindungsgemäße System ausgebildet, das Überwachungsprofil während einer Systemlaufzeit zu aktualisieren. In einer weiteren Variante kann das Überwachungsprofil in gewissen Zeitabschnitten, insbesondere periodisch, überprüft und gegebenenfalls angepasst werden, alternativ erfolgt es einmalig bei der Installation der App oder beim Starten der App.

In einer Variante kann eine Anlernphase für die Überwachungsprofile vorgesehen werden. Dabei kann insbesondere ein erstes Basisprofil zum Einsatz kommen und die Überwachungsereignisse einem Anwender präsentiert werden, insbesondere über eine Webserverschnittstelle des Gerätes. Dieser kann dann entscheiden, ob das für die betroffene App verwendete Profil entsprechend erweitert / angepasst werden soll. Das modifizierte Profil kann entweder das vorherige ersetzen, oder es kann ein neues Profil erstellt und in den Überwachungsrichtlinien berücksichtigt werden.

In einer weiteren Weiterbildung der Erfindung ist die Überwachungseinheit ausgebildet, den Umfang der Überwachung während dem Durchführen der Aktion durch das Anwendungsprogramm durchzuführen. Alternativ erfolgt insbesondere eine nachgeschaltete Auswertung der Aktionen.

In einer weiteren Weiterbildung der Erfindung ist das Privileg ausgebildet als:
- ein Administrationsrecht und/oder
- ein Verwenden eines Systemaufrufs und/oder
- ein Zugriffsrecht und/oder
- ein Zugriffsrecht auf eine Schnittstelle und/oder
- ein Zugriffsrecht auf eine Ressource und/oder
- ein Zugriffsrecht auf Systemdaten und/oder
- ein Zugriffsrecht auf ein Docker-Socket und/oder
- ein Zugriffsrecht auf Netzwerkverkehrsdaten und/oder
- ein Zugriffsrecht auf ein Netzwerk und/oder
- ein Zugriffsrecht auf einen hardware-basierten Schlüsselspeicher.

In einer weiteren Weiterbildung der Erfindung ist das Anwendungsprogramm als ein Benutzerprogramm ausgebildet. Das Benutzerprogramm stammt nicht von einem Hersteller des Systems, sondern von einem Benutzer des Systems.

In einer weiteren Weiterbildung der Erfindung ist die Überwachungseinheit ausgebildet, den Umfang der Überwachung in Abhängigkeit einer systemspezifischen Überwachungsrichtline durchzuführen. Die Überwachungsrichtlinien sind insbesondere durch einen Gerätehersteller / Maschinenbauer, oder auch durch einen Betreiber vorgegeben bzw. konfiguriert. Im Allgemeinen werden die Überwachungsrichtlinien in Abhängigkeit von der Security-Policy des Geräteherstellers / Maschinenbauers festgelegt sein und können diese damit auch unterstützen. Dabei wird angegeben, in Abhängigkeit welcher App-Eigenschaften welche Überwachungsprofile zum Einsatz kommen sollen und wie insbesondere eine Auswertung von Überwachungsereignissen durch das Gerät umzusetzen ist.

In einer weiteren Weiterbildung der Erfindung ist die Überwachungseinheit außerdem ausgebildet, Maßnahmen in Abhängigkeit eines Ergebnisses des Überwachens einzuleiten. Die Auswertung von Überwachungsereignissen (insbesondere bestimmter API-Aufruf auf einem Socket, Ausführen eines bestimmten Syscalls) kann entweder auf dem Gerät selbst oder insbesondere in einem Backend-System erfolgen. Wird erkannt, dass eine App eine schadhafte oder verdächtige Aktion ausführt, kann dies auf geeignete Art und Weise gemeldet werden (insbesondere Schreiben eines Logs, visuelles Signal an den Betreiber, Melden an eine andere Komponente des Gerätes oder Systems), oder unter Umständen auch reagiert werden, insbesondere durch das Beenden der App, Unterbinden weiterer Aktionen, Einschränken der Privilegien der App, etc.

Die Erfindung umfasst außerdem ein Verfahren zum Überwachen mindestens eines Anwendungsprogramms einer Laufzeitumgebung, mit den Schritten:
- Durchführen einer Aktion durch das mindestens eine Anwendungsprogramm, wobei dem mindestens einem Anwendungsprogramm ein Privileg zugeordnet ist, wobei das Durchführen der Aktion das Privileg voraussetzt, und
- Überwachen des mindestens einen Anwendungsprogramms, wobei ein Umfang der Überwachung von dem Privileg und dem Durchführen der Aktion abhängig durchgeführt wird.

Zusammengefasst wird vorgeschlagen, die von Apps durchgeführten Aktionen in Abhängigkeit ihrer Privilegien zu überwachen. Vorteilhaft ist hierbei insbesondere:
- Einer App kann bei Bedarf Zugriff auf privilegierte Schnittstellen / Ressourcen gegeben werden, wobei aber dennoch gewährleistet wird, dass schadhafte Aktionen auf diesen Schnittstellen / Ressourcen erkannt und gemeldet werden.
- Die Überwachung kann je nach Gerätekontext und Eigenschaften der App (insbesondere angeforderte Privilegien, Herkunft der App, etc.) flexibel angepasst werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines erfindungsgemäßen Systems und
- Fig. 2: ein Ablaufdiagramm des erfindungsgemäßen Verfahrens.

### DETAILLIERTE BESCHREIBUNG DER ERFINDUNG

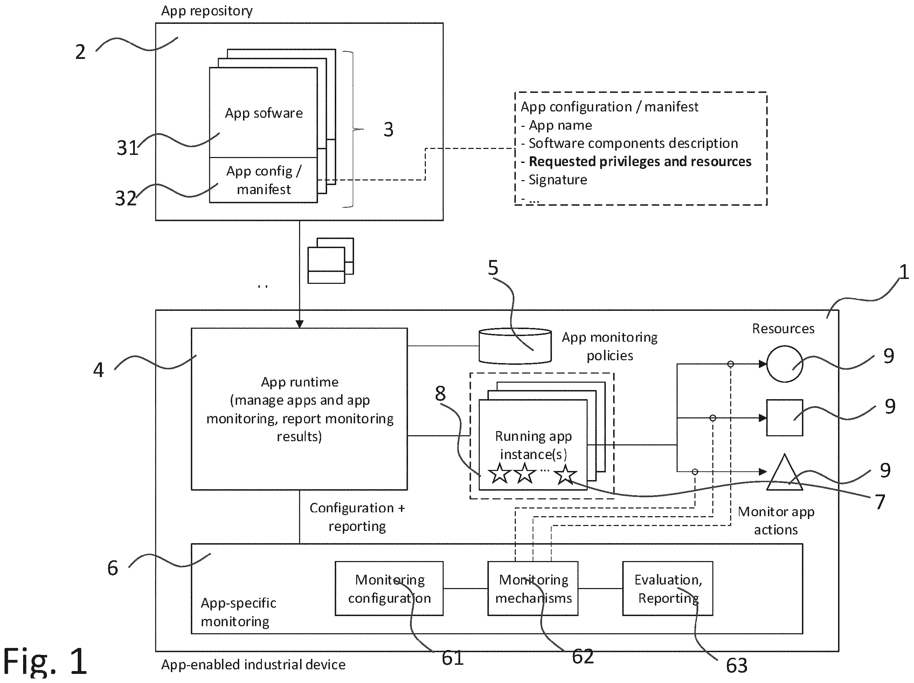

Fig. 1 zeigt eine schematische Darstellung eines erfindungsgemäßen Systems 1. Fig. 1 zeigt insbesondere ein industrielles Gerät 1, auf dem zur Laufzeit Apps 3 nachgeladen und ausgeführt werden können. Diese werden über ein angebundenes Repository 2 zur Verfügung gestellt und bestehen aus Software 31 (Binaries, Libraries, Konfigurationsdateien; z.B. Container Image), sowie einer App-spezifischen Konfiguration 32, in der u.a. die angeforderten Privilegien / Ressourcen der App spezifiziert werden. Hierbei kann es sich insbesondere um die benötigten Linux Capabilities, Laufzeitnutzer / - gruppe, Syscall-Profil, Verzeichnisse des Host-Dateisystems, Docker Volumes, oder auch spezielle Host-Dateien für Interprozesskommunikation wie z.B. Sockets, Devices, oder Shared-Memory-Bereiche handeln.

Soll eine App 3 auf das Gerät 1 geladen werden, wird diese durch eine App-Runtime 4 empfangen und anschließend durch diese verwaltet (Installieren, Ausführen, Stoppen, Deinstallieren). Durch das Starten der App, wir eine laufende Applikation 8 (running app instance) erstellt. Erfindungsgemäß kann die App-Runtime 4 nun im Zuge der Installation bzw. des Startens einer App 3 ein Überwachungsprofil für die App 8 ermitteln. Dies wird in Abhängigkeit der durch die App 3 geforderten Privilegien 7 und Ressourcen 9, weiterer Eigenschaften wie Herkunft der App 3 (insbesondere auf Basis einer digitalen Signatur + Herstellerzertifikat), sowie gerätespezifischen Überwachungsrichtlinien 5 ("app monitoring policies" 5) durchgeführt. Insbesondere kann in den Überwachungsrichtlinien 5 definiert werden, dass Apps 3, die von einem Drittanbieter kommen und zu Diagnosezwecken die Möglichkeit besitzen sollen, die auf dem Gerät 1 laufenden Apps 8 mittels des Docker-Sockets zu ermitteln, in ihrer Nutzung des Docker-Sockets überwacht werden sollen (Überwachen der Aufrufe an den Docker Daemon durch die App 8). Wird der App 3 insbesondere Zugriff auf den Docker-Socket gegeben, kann anschließend überwacht werden, dass darüber keine Ressourcen 9 des Docker Daemons verändert werden (insbesondere nur GET-Aufrufe und keine PUT- / POST- / PATCH- / DELETE-Aufrufe).

Die Überwachungsrichtlinien 5 können insbesondere durch einen Gerätehersteller / Maschinenbauer, oder auch durch einen Betreiber vorgegeben bzw. konfiguriert werden. Im Allgemeinen werden die Überwachungsrichtlinien 5 in Abhängigkeit von der Security-Policy des Geräteherstellers / Maschinenbauers festgelegt sein und können diese damit auch unterstützen. Dabei wird angegeben, in Abhängigkeit welcher App-Eigenschaften 32 welche Überwachungsprofile zum Einsatz kommen sollen und wie ggf. eine Auswertung von Überwachungsereignissen durch das Gerät umzusetzen ist.

Das Gerät weist eine Anwendungsprogramm-spezifische Monitoring-Komponente 6 auf. Die Anwendungsprogramm-spezifisches Monitoring-Komponente 6 weist eine Monitoring Konfiguration 61, einen Monitoring-Mechanismus 62, und eine Bewertungs- und Reporting-Einheit 63 auf. In Abhängigkeit des ermittelten Überwachungsprofils können nun entsprechende Monitoring-Mechanismen 62 zum Überwachen bzw. Überprüfen der ausgeführten Aktionen, sowie ggf. eine nachgeschaltete Auswertung der Aktionen, auf dem Gerät 1 konfiguriert werden. Insbesondere:
- Die Nutzung von privilegierten Capabilities / Syscalls 7, wie z.B. CAP_SYS_PTRACE / ptrace(), kann dahingehend überwacht werden, dass diese nur zu bestimmten, nicht invasiven Aktionen verwendet werden (z.B. Überwachen bestimmter Prozesse von Apps 8 des gleichen Herstellers). Die Überwachung eines Anwendungsprogramms kann z.B. durch die Verwendung dedizierter eBPF-Programme, einem Kernel-Modul, oder z.B. auditd Regeln realisiert werden. Denkbar ist auch die Verwendung eines MAC-Systems (z.B. SELinux / AppArmor), wobei die Prozesse der App 8 in einer passiven SELinux-Domäne / unter einem passiven AppArmor-Profil ausgeführt werden, wodurch nicht erlaubte Aktionen zwar zugelassen, aber durch den MAC-Mechanismus protokolliert werden.
- Überwachen der mittels eines Sockets durchgeführten API-Aufrufe, dass Ressourcen 9 z.B. nur gelesen (GET-Aufrufe) aber nicht modifiziert (z.B. PUT- oder POST-Aufrufe) werden. Dies kann z.B. durch das Erzeugen eines App-spezifischen Proxy-Sockets und eines Gateway-Prozesses erreicht werden. Die App 8 verwendet statt dem eigentlichen Ziel-Socket einen Proxy-Socket, dessen Aufrufe durch einen Gateway-Prozess überwacht und an das Ziel-Socket weitergeleitet werden.
- Für den Zugriff auf bestimmte Teile des Host-Dateisystems 7 kann der App 8 ein temporäres Proxy-Dateisystem bereitgestellt werden. Mit diesem kann das Host-Dateisystem, bzw. ein Teil davon, zunächst nur lesend zur Verfügung gestellt werden. Von der App 8 durchgeführte Dateiänderungen werden dabei nicht direkt auf den Originaldateien durchgeführt, sondern auf Kopien der betroffenen Dateien, welche die Originaldateien anschließend aus Sicht der App 8 maskieren. Dies kann beispielsweise mittels eines Overlay-Dateisystems realisiert werden. Vor dem Kopieren der Änderungen in die Originaldatei können die Änderungen nun überprüft werden. So kann z.B. sichergestellt werden, dass eine App 8 Daten zu einer Hostdatei hinzufügen, aber nicht löschen kann.

Die Auswertung von Überwachungsereignissen (z.B. bestimmter API-Aufruf auf einem Socket, Ausführen eines bestimmten Syscalls) durch die Bewertungs- und Reporting-Einheit 63 kann entweder auf dem Gerät 1 selbst oder alternativ in einem Backend-System erfolgen. Wird erkannt, dass eine App 8 eine schadhafte oder verdächtige Aktion ausführt, kann dies auf geeignete Art und Weise gemeldet werden (z.B. Schreiben eines Logs, visuelles Signal an den Betreiber, Melden an eine andere Komponente des Gerätes oder Systems), oder unter Umständen auch reagiert werden, z.B. durch das Beenden der App 8, Unterbinden weiterer Aktionen, Einschränken der Privilegien der App 8, etc.

In einer Variante kann eine Anlernphase für die Überwachungsprofile vorgesehen werden. Dabei kann z.B. ein erstes Basisprofil zum Einsatz kommen und die Überwachungsereignisse einem Anwender präsentiert werden, z.B. über eine Webserverschnittstelle des Gerätes. Dieser kann dann entscheiden, ob das für die betroffene App 3 verwendete Profil entsprechend erweitert / angepasst werden soll. Das modifizierte Profil kann entweder das vorherige ersetzen, oder es kann ein neues Profil erstellt und in den Überwachungsrichtlinien 5 berücksichtigt werden.

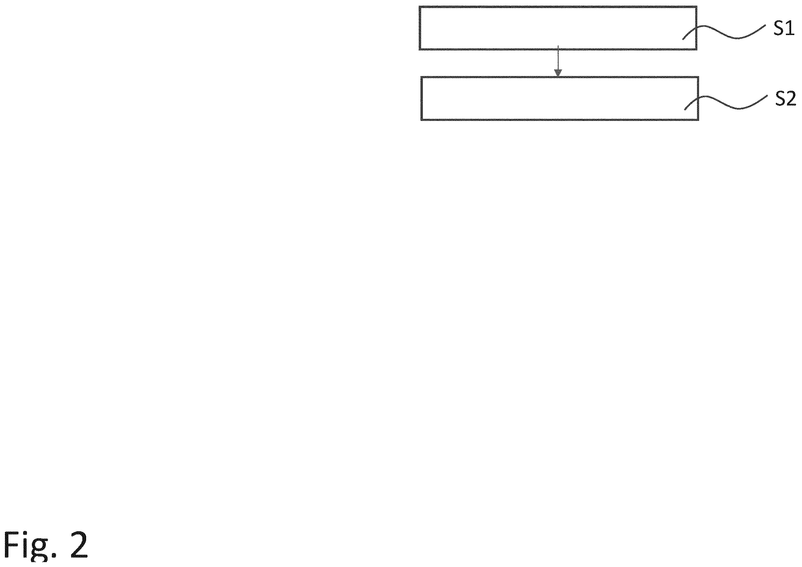

Fig. 2 zeigt ein Ablaufdiagramm des erfindungsgemäßen Verfahrens zum Überwachen mindestens eines Anwendungsprogramms einer Laufzeitumgebung, mit den Schritten:
- Schritt S1: Durchführen einer Aktion durch das mindestens eine Anwendungsprogramm, wobei dem mindestens einem Anwendungsprogramm ein Privileg zugeordnet ist, wobei das Durchführen der Aktion das Privileg voraussetzt, und
- Schritt S2: Überwachen des mindestens einen Anwendungsprogramms, wobei ein Umfang der Überwachung von dem Privileg und dem Durchführen der Aktion abhängig durchgeführt wird.

Es werden insbesondere die folgenden Schritte durchgeführt:
- Extrahieren und Analysieren der geforderten Privilegien, sowie weiterer Eigenschaften (z.B. Herstellerinformation) einer zu ladenden bzw. startenden App, auf Basis ihrer Metadaten (Konfiguration, Manifest).
- Bestimmen und Zuweisen eines Überwachungsprofils für die App in Abhängigkeit der extrahierten Eigenschaften und Privilegien. Die Zuweisung erfolgt unter Hinzunahme einer system- oder gerätespezifischen Überwachungsrichtlinie.
- Konfiguration und Starten entsprechender Überwachungsmechanismen auf Basis des erstellten Überwachungsprofils.
- Starten und Überwachen der App zu deren Laufzeit (inkl. Melden und ggf. Ausführen einer Reaktion).

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. System (1),
aufweisend:
- eine Laufzeitumgebung (4), ausgebildet mindestens ein Anwendungsprogramm (3, 8) auszuführen, wobei dem mindestens einem Anwendungsprogramm (3, 8) ein Privileg (7) zugeordnet ist, wobei ein Durchführen einer Aktion durch das Anwendungsprogramm (3, 8) das Privileg (7) voraussetzt,
- eine Überwachungseinheit (6), wobei die Überwachungseinheit (6) ausgebildet ist, einen Umfang einer Überwachung des mindestens einen Anwendungsprogramms (3, 8) in Abhängigkeit des Privilegs (7) und dem Durchführen der Aktion durchzuführen.

2. System (1) nach Anspruch 1,
wobei das System (1) ausgebildet ist als:
- ein Edge-Gerät und/oder
- ein IoT-Gateway und/oder
- ein industrielles Gerät und/oder
- ein Industrie-PC und/oder
- ein Linux-basiertes System und/oder
- ein on-premise Server-System und/oder
- ein Server-System in einer Cloud-Umgebung.

3. System (1) nach einem der vorhergehenden Ansprüche,
wobei die Überwachungseinheit (6) ausgebildet ist, die Aktion zu prüfen.

4. System (1) nach einem der vorhergehenden Ansprüche,
wobei die Überwachungseinheit (6) ausgebildet ist, den Umfang der Überwachung in Abhängigkeit eines Einsatzes des Privilegs (7) durchzuführen.

5. System (1) nach einem der vorhergehenden Ansprüche,
wobei die Überwachungseinheit (6) ausgebildet ist, den Umfang der Überwachung in Abhängigkeit eines Umfangs des Privilegs (7) durchzuführen.

6. System (1) nach einem der vorhergehenden Ansprüche,
wobei die Überwachungseinheit (6) ausgebildet ist, den Umfang der Überwachung in Abhängigkeit von:
- einem Anbieter des Anwendungsprogramms (3, 8) und/oder
- Metadaten des Anwendungsprogramms (3, 8) und/oder
- einer Konfiguration des Anwendungsprogramms (3, 8) und/oder
- einer Plattform, von der das Anwendungsprogramm (3, 8) geladen wurde und/oder
- einem Nutzer, der das Anwendungsprogramm (3, 8) installiert hat, und/oder
- einem Nutzer, der das Anwendungsprogramm (3, 8) verwendet, und/oder
- einem aktuellen Betriebsmodus des Systems (1) und/oder
- einem durch das System (1) gesteuerten technischen Prozess
durchzuführen.

7. System (1) nach einem der vorhergehenden Ansprüche,
wobei die Überwachungseinheit (6) ausgebildet ist, dem mindestens einem Anwendungsprogramm (3, 8) ein Überwachungsprofil zuzuweisen.

8. System (1) nach Anspruch 7,
wobei die Überwachungseinheit (6) ausgebildet ist,
den Umfang der Überwachung in Abhängigkeit des Überwachungsprofils durchzuführen.

9. System (1) nach Anspruch 7 oder 8,
ausgebildet, das Überwachungsprofil während einer Systemlaufzeit zu aktualisieren.

10. System (1) nach einem der vorhergehenden Ansprüche,
wobei die Überwachungseinheit (6) ausgebildet ist, den Umfang der Überwachung während dem Durchführen der Aktion durch das Anwendungsprogramm (3, 8) durchzuführen.

11. System (1) nach einem der vorhergehenden Ansprüche, wobei das Privileg (7) ausgebildet ist als:
- ein Administrationsrecht und/oder
- ein Verwenden eines Systemaufrufs und/oder
- ein Zugriffsrecht und/oder
- ein Zugriffsrecht auf eine Schnittstelle und/oder
- ein Zugriffsrecht auf eine Ressource (9) und/oder
- ein Zugriffsrecht auf Systemdaten und/oder
- ein Zugriffsrecht auf ein Docker-Socket und/oder
- ein Zugriffsrecht auf Netzwerkverkehrsdaten und/oder
- ein Zugriffsrecht auf ein Netzwerk und/oder
- ein Zugriffsrecht auf einen hardware-basierten Schlüsselspeicher.

12. System (1) nach einem der vorhergehenden Ansprüche, wobei das Anwendungsprogramm (3, 8) als ein Benutzerprogramm ausgebildet ist.

13. System (1) nach einem der vorhergehenden Ansprüche, wobei die Überwachungseinheit (6) ausgebildet ist, den Umfang der Überwachung in Abhängigkeit einer systemspezifischen Überwachungsrichtline (5) durchzuführen.

14. System (1) nach einem der vorhergehenden Ansprüche, wobei die Überwachungseinheit (6) außerdem ausgebildet ist, Maßnahmen (63) in Abhängigkeit eines Ergebnisses des Überwachens einzuleiten.

15. Verfahren zum Überwachen mindestens eines Anwendungsprogramms (3, 8) einer Laufzeitumgebung (4), mit den Schritten:
- Durchführen (S1) einer Aktion durch das mindestens eine Anwendungsprogramm (3, 8), wobei dem mindestens einem Anwendungsprogramm (3, 8) ein Privileg (7) zugeordnet ist, wobei das Durchführen der Aktion das Privileg (7) voraussetzt, und
- Überwachen (S2) des mindestens einen Anwendungsprogramms (3, 8), wobei ein Umfang der Überwachung von dem Privileg (7) und dem Durchführen der Aktion abhängig durchgeführt wird.
